# EUROPÄISCHE PATENTSCHRIFT

(11) **EP 3 441 898 B1**
(45) Veröffentlichungstag und Bekanntmachung des Hinweises auf die Patenterteilung: **12.02.2020**
(21) Anmeldenummer: 17185746.9
(22) Anmeldetag: 10.08.2017
(51) Int. Cl.: G06F 21/12, G06F 21/14

(54) **VERFAHREN UND VORRICHTUNG ZUM SCHÜTZEN EINER SOFTWARE GEGEN EIN UNBEFUGTES NUTZEN**
METHOD AND DEVICE FOR PROTECTING SOFTWARE AGAINST UNAUTHORISED USE
PROCÉDÉ ET DISPOSITIF DE PROTECTION D'UN LOGICIEL CONTRE UN UTILISATEUR NON-AUTORISÉ

(43) Veröffentlichungstag der Anmeldung: 13.02.2019
(73) Patentinhaber: Siemens Aktiengesellschaft, 80333 München (DE)
(72) Erfinder: Zwanzger, Johannes, 85579 Neubiberg (DE)

(56) Entgegenhaltungen:
- EP-A1- 3 185 168
- US-A1- 2012 192 283

## Beschreibung

Die vorliegende Erfindung betrifft ein Verfahren und eine Vorrichtung zum Schützen einer Software gegen ein unbefugtes Nutzen.

Eine Software umfasst häufig eine ausführbare Software und eine Softwarebibliothek, wobei die ausführbare Software mit vorbestimmten Argumenten auf vorbestimmte Funktionen der Softwarebibliothek zugreifen kann. Es besteht ein Bedarf, die gesamte Software gegen ein unbefugtes Nutzen, zum Beispiel gegen ein unbefugtes Verwenden der vorbestimmten Funktionen der Softwarebibliothek, zu schützen.

Es ist bekannt, die gesamte Software durch Verschlüsseln des ausführbaren Codes zu patchen, damit sie für einen unbefugten Nutzer nicht lesbar ist. Das Patchen muss bei jeder Änderung in der ausführbaren Software und/oder in der Softwarebibliothek neu durchgeführt werden.

Das Dokument EP 3 185 168 A1 offenbart ein Verfahren und ein System zum Erhöhen der Sicherheit eines Kommunikationsgeräts beim Durchführen einer Transaktion mit einer Transaktionsapplikation des Kommunikationsgeräts. In dem Zusammenhang werden insbesondere Maßnahmen gegen Code-Lifting und Data-Lifting für dynamisch miteinander verbundene native Softwarebibliotheken vorgeschlagen.

Das Dokument US 2012/0192283 A1 offenbart ein System und ein Verfahren zum Verändern einer Softwareapplikation von einer Originalform in eine sicherere Form. Hierzu wird die Applikation durch Transmutationen verändert. Transmutationen sind dabei irreversible Veränderungen der Applikation. Die veränderte Softwareapplikation entspricht der Ursprungssoftwareapplikation, ist aber gegen statische und/oder dynamische Angriffe beständig.

Vor diesem Hintergrund besteht eine Aufgabe der vorliegenden Erfindung darin, einen verbesserten Schutz einer Software gegen ein unbefugtes Nutzen zu schaffen.

Diese Aufgabe wird durch ein Verfahren zum Schützen einer Software gegen ein unbefugtes Nutzen nach Anspruch 1 und durch eine Vorrichtung zum Schützen einer Software gegen ein unbefugtes Nutzen nach Anspruch 9 gelöst. Ausführungsformen des Verfahrens werden in den Unteransprüchen beschrieben. Gemäß einem ersten Aspekt wird ein Verfahren zum Schützen einer Software gegen ein unbefugtes Nutzen vorgeschlagen. Die Software umfasst eine ausführbare Software und eine Softwarebibliothek, die der ausführbaren Software für vorbestimmte Argumente vorbestimmte Funktionen bereitstellt. Das Verfahren umfasst:
Anwenden einer ersten Funktion auf ein vorbestimmtes Argument aus den vorbestimmten Argumenten zum Erzeugen eines geschützten Arguments durch die ausführbare Software derart, dass das vorbestimmte Argument nur unter Anwenden einer ersten invertierenden Funktion auf das geschützte Argument ermittelbar ist; und
Anwenden einer zweiten Funktion auf eine vorbestimmte Funktion aus den vorbestimmten Funktionen zum Erzeugen einer geschützten Funktion durch die Softwarebibliothek derart, dass die vorbestimmte Funktion nur unter Anwenden einer zweiten invertierenden Funktion auf die geschützte Funktion ermittelbar ist.

Zum Schützen der Software können vorbestimmte Argumente und/oder vorbestimmte Funktionen, die zwischen der ausführbaren Software und der Softwarebibliothek ausgetauscht werden, geschützt, insbesondere verschlüsselt oder signiert, ausgetaucht werden.

Die ausführbare Software ist insbesondere ein kompilierter Quellcode. Die ausführbare Software kann vorbestimmte Argumente, z.B. Zahlenfolgen, an die Softwarebibliothek bereitstellen, um von dieser vorbestimmte Funktionen als Ergebnisse zu erhalten. Die vorbestimmten Argumente können durch die ausführbare Software erzeugt oder berechnet werden und/oder Teil der ausführbaren Software sein.

Die Softwarebibliothek kann eine dynamische Softwarebibliothek sein, wie zum Beispiel eine DLL ("dynamic-link library") unter Windows oder eine "shared library" unter unixartigen Betriebssystemen wie Linux. Die Softwarebibliothek kann dazu dienen, Funktionscode für die ausführbare Software auszulagern. Die Softwarebibliothek kann mehrere vorbestimmte Funktionen umfassen, welche durch die vorbestimmten Argumente abrufbar sind.

In Ausführungsformen wird die Softwarebibliothek unabhängig von der ausführbaren Software entwickelt. Die Softwarebibliothek wird zum Beispiel durch einen Zulieferer an den Hersteller der ausführbaren Software geliefert. Die Softwarebibliothek kann kompiliert und gepatcht vorliegen, sodass sie nicht veränderbar ist.

Das beschriebene Verfahren dient insbesondere dazu, die aus der ausführbaren Software und der Softwarebibliothek bestehenden Software gegen ein unbefugtes Nutzen zu schützen. Ein unbefugtes Nutzen kann ein unerlaubtes Verwenden der Software, insbesondere der vorbestimmten Argumente und/oder der vorbestimmten Funktionen, sein. Ferner kann das unbefugte Nutzen auch ein Manipulieren und/oder Kopieren der Software oder von Softwareteilen, sowie einen Angriff auf die Software, insbesondere einen "Code-Lifting-Angriff", umfassen.

Zum Schutz der Software wird das vorbestimmte Argument durch die ausführbare Software geschützt, insbesondere kryptographisch geschützt oder mit Hilfe eines Algorithmus geschützt, an die Softwarebibliothek bereitgestellt werden. Hierzu kann auf eines der vorbestimmten Argumente eine erste Funktion angewandt werden, um ein geschütztes Argument zu erzeugen. Die erste Funktion kann hierbei in der ausführbaren Software vorliegen. Insbesondere ist ein Code der ersten Funktion über die ausführbare Software hinweg verteilt. Die erste Funktion ist ein kryptographischer Algorithmus. In Ausführungsformen ist die erste Funktion ein invertierbarer Algorithmus.

Das geschützte Argument umfasst insbesondere das vorbestimmte Argument. In Ausführungsformen wird das vorbestimmte Argument durch die erste Funktion kryptographisch verschlüsselt, sodass das geschützte Argument dem verschlüsselten vorbestimmten Argument entspricht.

Das vorbestimmte Argument kann insbesondere nur aus dem geschützten Argument ermittelt oder abgeleitet werden, wenn auf das geschützte Argument die erste invertierende Funktion angewandt wird. Die erste invertierende Funktion kann das geschützte Argument z.B. derart verändern, dass daraus das vorbestimmte Argument zurückgewonnen wird. Die erste invertierende Funktion bildet somit insbesondere ein Gegenstück zur ersten Funktion. In Ausführungsformen umfasst die Softwarebibliothek die erste invertierende Funktion.

Dadurch, dass das vorbestimmte Argument durch die ausführbare Software mit der ersten Funktion geschützt wird, kann verhindert werden, dass das vorbestimmte Argument böswillig abgefangen wird und verwendet wird. Insbesondere kann nur eine Softwarebibliothek, die die erste invertierende Funktion umfasst, aus dem geschützten Argument das vorbestimmte Argument ermitteln. Dadurch kann beispielsweise verhindert werden, dass ein böswilliger Nutzer das vorbestimmte Argument einer gefälschten Softwarebibliothek bereitstellt, und somit die Software manipuliert. Zudem kann verhindert werden, dass der Softwarebibliothek andere Argumente als die vorbestimmten Argumente bereitgestellt werden, und dass die Funktionen der Softwarebibliothek unbefugt genutzt werden. Die Softwarebib liothek und die ausführbare Software können zum Schutz der Software zusammenwirken. Insgesamt kann somit die Sicherheit der Software erhöht werden.

Zusätzlich wird zum Schutz der Software die vorbestimmte Funktion durch die Softwarebibliothek geschützt, insbesondere kryptographisch geschützt oder mit Hilfe eines Algorithmus geschützt, an die ausführbare Software bereitgestellt werden. Hierzu kann auf eine der vorbestimmten Funktionen eine zweite Funktion angewandt werden, um eine geschützte Funktion zu erzeugen. Die zweite Funktion kann hierbei in der Softwarebibliothek vorliegen. Insbesondere ist ein Code der zweiten Funktion über die Softwarebibliothek hinweg verteilt. Die zweite Funktion ist ein kryptographischer Algorithmus. In Ausführungsformen ist die zweite Funktion ein invertierbarer Algorithmus.

Die geschützte Funktion umfasst insbesondere die vorbestimmte Funktion. In Ausführungsformen wird die vorbestimmte Funktion durch die zweite Funktion kryptographisch verschlüsselt, sodass die geschützte Funktion der verschlüsselten vorbestimmten Funktion entspricht.

Die vorbestimmte Funktion kann insbesondere nur dann aus der geschützten Funktion ermittelt oder abgeleitet werden, wenn auf die geschützte Funktion die zweite invertierende Funktion angewandt wird. Die zweite invertierende Funktion kann die geschützte Funktion z.B. derart verändern, dass daraus die vorbestimmte Funktion zurückgewonnen wird. Die zweite invertierende Funktion bildet somit insbesondere ein Gegenstück zur zweiten Funktion. In Ausführungsformen umfasst die ausführbare Software die zweite invertierende Funktion. Insbesondere ist ein Code der zweiten invertierenden Funktion über die ausführbare Software hinweg verteilt.

Dadurch, dass die vorbestimmte Funktion durch die Softwarebibliothek mit der zweiten Funktion geschützt wird, kann verhindert werden, dass die vorbestimmte Funktion böswillig abgefangen wird und verwendet wird. Insbesondere kann nur eine ausführbare Software, die die zweite invertierende Funktion umfasst, aus der geschützten Funktion die vorbestimmte Funktion ermitteln. Dadurch kann beispielsweise verhindert werden, dass ein böswilliger Nutzer die durch die Softwarebibliothek bereitgestellten vorbestimmten Funktionen unbefugt nutzt, z.B indem er die vorbestimmten Funktionen einer gefälschten ausführbaren Software bereitstellt. Zudem kann verhindert werden, dass der ausführbaren Software andere Funktionen als die vorbestimmten Funktionen bereitgestellt werden. Insgesamt kann die Sicherheit der Software geschützt werden.

Die gesamte Software kann auch dann geschützt werden, wenn kein Patchen der ausführbaren Software und der Softwarebibliothek als gesamte Software vorliegt. Dies hat den Vorteil, dass die ausführbare Software und/oder die Softwarebibliothek beliebig verändert werden können, wodurch eine Flexibilität der Software erhöht werden kann.

Gemäß einer Ausführungsform umfasst das Verfahren ferner:
Übertragen des geschützten Arguments an die Softwarebibliothek von der ausführbaren Software;
Anwenden der ersten invertierenden Funktion auf das geschützte Argument durch die Softwarebibliothek zum Ermitteln des vorbestimmten Arguments; und
Bereitstellen der vorbestimmten Funktion für das ermittelte vorbestimmte Argument an die ausführbare Software durch die Softwarebibliothek.

Die erste invertierende Funktion kann in der Softwarebibliothek vorliegen, sodass die Softwarebibliothek das vorbestimmte Argument aus dem empfangenen geschützten Argument ermitteln kann. Die Softwarebibliothek kann der ausführbaren Software diejenige vorbestimmte Funktion zur Verfügung stellen, die dem ermittelten Argument entspricht. In Ausführungsformen wird die vorbestimmte Funktion mit Hilfe eines in der Softwarebibliothek vorliegenden Algorithmus für das vorbestimmte Argument ermittelt und als ein Ergebnis an die ausführbare Software bereitgestellt.

Gemäß einer weiteren Ausführungsform umfasst das Verfahren ferner:
Übertragen der geschützten Funktion an die ausführbare Software von der Softwarebibliothek; und
Anwenden der zweiten invertierenden Funktion auf die geschützte Funktion durch die ausführbare Software zum Ermitteln der vorbestimmten Funktion.

Die zweite invertierende Funktion kann in der ausführbaren Software vorliegen, sodass die ausführbare Software die vorbestimmte Funktion aus der empfangenen geschützten Funktion ermitteln kann. Die ausführbare Software kann die vorbestimmte Funktion z.B. verwenden, um Berechnungen durchzuführen und/oder die vorbestimmte Funktion an einen Nutzer ausgeben.

Gemäß einer weiteren Ausführungsform verschlüsselt die erste Funktion das vorbestimmte Argument mit einem ersten Verschlüsselungsschlüssel, signiert das vorbestimmte Argument mit Hilfe eines ersten Signaturschlüssels mit einer ersten digitalen Signatur und/oder fügt dem vorbestimmten Argument einen ersten Nachrichtenauthentisierungscode zu.

Das geschützte Argument kann dem mit dem ersten Verschlüsselungsschlüssel verschlüsselten vorbestimmten Argument und/oder dem mit der ersten digitalen Signatur signierten vorbestimmten Argument entsprechen. Der erste Verschlüsselungsschlüssel kann hierbei ein kryptographischer Schlüssel sein, wie z.B. ein symmetrischer Schlüssel oder ein asymmetrischer öffentlicher Schlüssel. Der erste Signaturschlüssel kann hierbei ein kryptographischer Schlüssel sein, wie z.B. ein asymmetrischer privater Schlüssel.

Ferner kann dem vorbestimmten Argument ein erster Nachrichtenauthentisierungscode, auch MAC ("message authentication code"), zugefügt werden. Der erste Nachrichtenauthentisierungscode kann mit einem ersten symmetrischen Schlüssel berechnet werden. Das geschützte Argument umfasst insbesondere das vorbestimmte Argument sowie den ersten Nachrichtenauthentisierungscode.

Gemäß einer weiteren Ausführungsform verschlüsselt die zweite Funktion die vorbestimmte Funktion mit einem zweiten Verschlüsselungsschlüssel, signiert die vorbestimmte Funktion mit Hilfe eines zweiten Signaturschlüssels mit einer zweiten digitalen Signatur und/oder fügt der vorbestimmten Funktion einen zweiten Nachrichtenauthentisierungscode zu.

Die geschützte Funktion kann der mit dem zweiten Verschlüsselungsschlüssel verschlüsselten vorbestimmten Funktion und/oder der mit der zweiten digitalen Signatur signierten vorbestimmten Funktion entsprechen. Der zweite Verschlüsselungsschlüssel kann hierbei ein kryptographischer Schlüssel sein, wie z.B. ein symmetrischer Schlüssel oder ein asymmetrischer öffentlicher Schlüssel. Der zweite Signaturschlüssel kann hierbei ein kryptographischer Schlüssel sein, wie z.B. ein asymmetrischer privater Schlüssel.

Ferner kann dem vorbestimmten Argument ein zweiter Nachrichtenauthentisierungscode (MAC) zugefügt werden. Der zweite Nachrichtenauthentisierungscode kann mit einem zweiten symmetrischen Schlüssel berechnet werden. Die geschützte Funktion umfasst insbesondere die vorbestimmte Funktion sowie den zweiten Nachrichtenauthentisierungscode.

Gemäß einer weiteren Ausführungsform entschlüsselt die erste invertierende Funktion das geschützte Argument mit einem ersten Entschlüsselungsschlüssel, prüft eine digitale Signatur des geschützten Arguments mit einem ersten Verifikationsschlüssel und/oder prüft einen ersten Nachrichtenauthentifizierungscode des geschützten Arguments.

Der erste Entschlüsselungsschlüssel kann mit dem ersten Verschlüsselungsschlüssel ein kryptographisches Schlüsselpaar bilden. Der erste Entschlüsselungsschlüssel kann hierbei ein kryptographischer Schlüssel sein, z.B. ein symmetrischer Schlüssel oder ein asymmetrischer privater Schlüssel, der zum Entschlüsseln eines geschützten Arguments, das mit einem symmetrischen oder asymmetrischen öffentlichen Schlüssel als ersten Verschlüsselungsschlüssel verschlüsselt wurde, geeignet ist.

Der erste Verifikationsschlüssel kann mit dem ersten Signaturschlüssel ein kryptographisches Schlüsselpaar bilden. Der erste Verifikationsschlüssel kann hierbei ein kryptographischer Schlüssel sein, z.B. ein asymmetrischer öffentlicher Schlüssel, der zur Verifikation einer Signatur, die mit einem asymmetrischen privaten Schlüssel als erstem Signaturschlüssel erstellt wurde, geeignet ist.

Die erste invertierende Funktion kann auch eine digitale Signatur des geschützten Arguments prüfen. Es wird insbesondere geprüft, ob das geschützte Argument mit dem ersten Signaturschlüssel, der der ausführbaren Software eigen ist, digital signiert wurde. Falls dies der Fall ist, kann die Softwarebibliothek die vorbestimmte Funktion bereitstellen. Mit der digitalen Signatur kann zudem eine Herkunft des geschützten Arguments überprüft werden.

Der erste Nachrichtenauthentifizierungscode kann geprüft werden, indem die Softwarebibliothek für das vorbestimmte geschützte Argument einen zu vergleichenden ersten Nachrichtenauthentisierungscode erzeugt, und den zu vergleichenden ersten Nachrichtenauthentisierungscode mit dem empfangenen ersten Nachrichtenauthentisierungscode vergleicht. Der zu vergleichenden erste Nachrichtenauthentisierungscode kann z.B. mit dem ersten symmetrischen Schlüssel berechnet werden. Falls der zu vergleichende erste Nachrichtenauthentisierungscode mit dem empfangenen ersten Nachrichtenauthentisierungscode übereinstimmt, stellt die Softwarebibliothek insbesondere die vorbestimmte Funktion bereit. Mit dem Nachrichtenauthentifizierungscode kann zudem eine Herkunft des geschützten Arguments überprüft werden.

Gemäß einer weiteren Ausführungsform entschlüsselt die zweite invertierende Funktion die geschützte Funktion mit einem zweiten Entschlüsselungsschlüssel, prüft eine digitale Signatur der geschützten Funktion mit einem zweiten Verifikationsschlüssel und/oder prüft einen zweiten Nachrichtenauthentifizierungscode der geschützten Funktion.

Der zweite Entschlüsselungsschlüssel kann mit dem zweiten Verschlüsselungsschlüssel ein kryptographisches Schlüsselpaar bilden. Der zweite Entschlüsselungsschlüssel kann hierbei ein kryptographischer Schlüssel sein, z.B. ein symmetrischer Schlüssel oder ein asymmetrischer privater Schlüssel, der zum Entschlüsseln eines geschützten Arguments, das mit einem symmetrischen oder asymmetrischen öffentlichen Schlüssel als zweitem Verschlüsselungsschlüssel verschlüsselt wurde, geeignet ist.

Der zweite Verifikationsschlüssel kann mit dem zweiten Signaturschlüssel ein kryptographisches Schlüsselpaar bilden. Der zweite Verifikationsschlüssel kann hierbei ein kryptographischer Schlüssel sein, z.B. ein asymmetrischer öffentlicher Schlüssel, der zur Verifikation einer Signatur, die mit einem asymmetrischen privaten Schlüssel als zweitem Signaturschlüssel erstellt wurde, geeignet ist.

Die zweite invertierende Funktion kann auch eine digitale Signatur der geschützten Funktion prüfen. Es wird insbesondere geprüft, ob die geschützte Funktion mit dem zweiten digitalen Signaturschlüssel, der der Softwarebibliothek eigen ist, digital signiert wurde. Falls dies der Fall ist, kann die ausführbare Software die bereitgestellte vorbestimmte Funktion nutzen. Mit der digitalen Signatur kann zudem eine Herkunft der geschützten Funktion überprüft werden.

Der zweite Nachrichtenauthentifizierungscode kann geprüft werden, indem die ausführbare Software für die empfangene vorbestimmte Funktion einen zu vergleichenden zweiten Nachrichtenauthentisierungscode erzeugt, und den zu vergleichenden zweiten Nachrichtenauthentisierungscode mit dem empfangenen zweiten Nachrichtenauthentisierungscode vergleicht. Der zu vergleichenden zweite Nachrichtenauthentisierungscode kann z.B. mit dem zweiten symmetrischen Schlüssel berechnet werden. Falls der zu vergleichende zweite Nachrichtenauthentisierungscode mit dem empfangenen zweiten Nachrichtenauthentisierungscode übereinstimmt, verwendet die ausführbare Software insbesondere die empfangene vorbestimmte Funktion. Mit dem Nachrichtenauthentifizierungscode kann zudem eine Herkunft der geschützten Funktion überprüft werden.

Gemäß einer weiteren Ausführungsform umfasst das Verfahren ferner:
Ermitteln durch die Softwarebibliothek, ob ein durch die Softwarebibliothek empfangenes Argument mit der ersten Funktion geschützt wurde; und
falls ermittelt wird, dass das durch die Softwarebibliothek empfangene Argument nicht mit der ersten Funktion geschützt wurde, Unterbinden des Bereitstellens der vorbestimmten Funktion an die ausführbare Software.

Falls der Softwarebibliothek ein gefälschtes Argument bereitgestellt wird, kann die Softwarebibliothek dieses dadurch erkennen, dass das gefälschte Argument nicht mit der ersten Funktion geschützt wurde, z.B. weil das gefälschte Argument nicht digital signiert ist. Insbesondere kann die Softwarebibliothek mit der ersten invertierenden Funktion kein vorbestimmtes Argument aus dem gefälschten Argument ermitteln. Ein gefälschtes Argument kann in Ausführungsformen durch die Softwarebibliothek erkannt werden, wodurch eine Manipulation der Software verhindert werden kann.

Falls ermittelt wird, dass das empfangene Argument nicht mit der ersten Funktion geschützt wurde, kann ferner ein Alarmsignal ausgegeben werden. Zudem können in diesem Fall die vorbestimmten Funktionen aus der Softwarebibliothek gelöscht oder unbrauchbar gemacht werden. Auch weitere Daten aus der Software können gelöscht oder unbrauchbar gemacht werden.

In Ausführungsformen wird die vorbestimmte Funktion an die ausführbare Software bereitgestellt, falls ermittelt wird, dass das empfangene Argument mit der ersten Funktion geschützt wurde. In diesem Fall ist das empfangene Argument ein geschütztes Argument.

Gemäß einer weiteren Ausführungsform umfasst das Verfahren ferner:
Ermitteln durch die ausführbare Software, ob eine durch die ausführbare Software empfangenes Funktion mit der zweiten Funktion geschützt wurde; und
falls ermittelt wird, dass die durch die ausführbare Software empfangene Funktion nicht mit der zweiten Funktion geschützt wurde, Ausgeben einer Fehlermeldung und/oder Löschen von zumindest einem Teil der Software.

Falls der ausführbaren Software eine gefälschte Funktion bereitgestellt wird, kann die ausführbare Software dieses dadurch erkennen, dass die gefälschte Funktion nicht mit der zweiten Funktion geschützt wurde, z.B. weil die gefälschte Funktion nicht digital signiert ist. Insbesondere kann die ausführbare Software mit der zweiten invertierenden Funktion keine vorbestimmte Funktion aus der gefälschten Funktion ermitteln. Eine gefälschte Funktion kann in Ausführungsformen durch die ausführbare Software erkannt werden, wodurch eine Manipulation der Software verhindert werden kann.

Falls ermittelt wird, dass die empfangene Funktion nicht mit der zweiten Funktion geschützt wurde, kann eine Fehlermeldung, insbesondere ein Alarmsignal, ausgegeben werden. Zudem kann in diesem Fall zumindest ein Teil der Software gelöscht oder unbrauchbar gemacht werden.

In Ausführungsformen wird die vorbestimmte Funktion durch die ausführbare Software weiterverwendet, falls ermittelt wird, dass die empfangene Funktion mit der zweiten Funktion geschützt wurde. In diesem Fall ist die empfangene Funktion eine geschützte Funktion.

Gemäß einer weiteren Ausführungsform liegen die vorbestimmten Funktionen in der Softwarebibliothek verschlüsselt vor. Zur Verschlüsselung der vorbestimmten Funktionen kann die Softwarebibliothek gepatcht werden.

Gemäß einer weiteren Ausführungsform umfasst das Verfahren ferner ein Authentisieren der Softwarebibliothek bei der ausführbaren Software und/oder ein Authentisieren der ausführbaren Software bei der Softwarebibliothek.

Zum Authentisieren der ausführbaren Software bei der Softwarebibliothek kann die Softwarebibliothek Überprüfungsdaten erzeugen und an die ausführbare Software übertragen. Die Überprüfungsdaten sind beispielsweise Zufallszahlen, die mit einem echten Zufallszahlengenerator erzeugt werden.

Die ausführbare Software kann die Überprüfungsdaten z.B. mit einem symmetrischen oder asymmetrischen Verschlüsselungsschlüssel verschlüsseln. Die verschlüsselten Überprüfungsdaten können an die Softwarebibliothek übertragen werden, welche mit einem korrespondierenden symmetrischen oder asymmetrischen Entschlüsselungsschlüssel, der dem symmetrischen Verschlüsselungsschlüssel entspricht oder mit dem asymmetrischen Verschlüsselungsschlüssel ein Schlüsselpaar bildet, entschlüsselt. Die entschlüsselten Daten können mit den durch die Softwarebibliothek erzeugten Überprüfungsdaten verglichen werden. Bei Übereinstimmung kann die ausführbare Software sich erfolgreich bei der Softwarebibliothek authentisieren.

Ferner kann die ausführbare Software die Überprüfungsdaten mit Hilfe eines privaten Schlüssels mit einer digitalen Signatur signieren und die signierten Überprüfungsdaten an die Softwarebibliothek übertragen. Die Softwarebibliothek kann die Signatur mit Hilfe eines korrespondierenden öffentlichen Schlüssels, der mit dem privaten Schlüssel ein Schlüsselpaar bildet, verifizieren. Falls ermittelt wird, dass die Signatur korrekt ist, kann die ausführbare Software sich erfolgreich bei der Softwarebibliothek authentisieren.

Ferner kann die ausführbare Software den Überprüfungsdaten einen Nachrichtenauthentisierungscode (MAC), der mit einem symmetrischen Schlüssel berechnet wird, zuordnen und die Überprüfungsdaten mit dem Nachrichtenauthentisierungscode an die Softwarebibliothek übertragen. Die Softwarebibliothek erzeugt für die empfangenen Überprüfungsdaten unabhängig einen zu vergleichenden Nachrichtenauthentisierungscode und vergleicht diesen mit dem empfangenen Nachrichtenauthentisierungscode. Bei Übereinstimmung kann die ausführbare Software sich erfolgreich bei der Softwarebibliothek authentisieren.

Der Authentisierung der ausführbaren Software bei der Softwarebibliothek zufolge kann ein Bereitstellen der vorbestimmten Funktionen an die ausführbare Software zugelassen werden.

Die Authentisierung der Softwarebibliothek bei der ausführbaren Software erfolgt gleichermaßen.

Gemäß einem zweiten Aspekt wird ein Computerprogrammprodukt vorgeschlagen, welches auf einer programmgesteuerten Einrichtung die Durchführung des Verfahrens gemäß dem ersten Aspekt oder einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Schützen einer Software gegen ein unbefugtes Nutzen vorgeschlagen, welche in Anspruch 9 definiert wird.

Die erste und/oder zweite Einheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren werden das Verfahren und die Vorrichtung anhand von bevorzugten Ausführungsformen unter Bezugnahme auf die beigelegten Figuren näher erläutert.
- Fig. 1: zeigt eine Vorrichtung zum Schützen einer Software gegen ein unbefugtes Nutzen gemäß einer ersten Ausführungsform;
- Fig. 2: zeigt ein Verfahren zum Schützen einer Software gegen ein unbefugtes Nutzen gemäß einer ersten Ausführungsform;
- Fig. 3: zeigt ein Verfahren zum Schützen einer Software gegen ein unbefugtes Nutzen gemäß einer zweiten Ausführungsform;
- Fig. 4: zeigt ein Verfahren zum Schützen einer Software gegen ein unbefugtes Nutzen gemäß einer dritten Ausführungsform; und
- Fig. 5: zeigt eine Vorrichtung zum Schützen einer Software gegen ein unbefugtes Nutzen gemäß einer zweiten Ausführungsform.

In den Figuren sind gleiche oder funktionsgleiche Elemente mit denselben Bezugszeichen versehen worden, sofern nichts anderes angegeben ist.

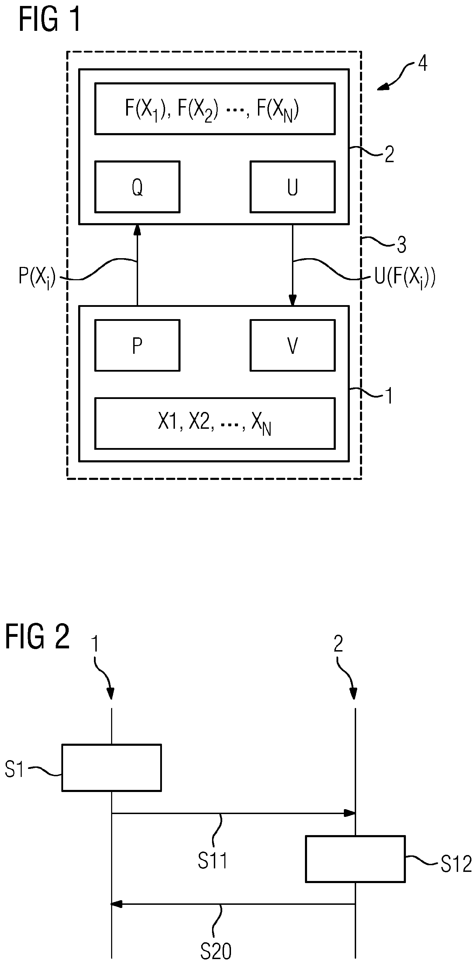

Die Fig. 1 zeigt eine Vorrichtung 4 zum Schützen einer Software 3 gegen ein unbefugtes Nutzen gemäß einer ersten Ausführungsform. Die Vorrichtung 4 ist softwaretechnisch implementiert und in der Software 3 enthalten.

Die Software 3 umfasst eine ausführbare Software 1 und eine Softwarebibliothek 2. Die ausführbare Software 1 wurde durch Kompilieren eines nicht dargestellten Quellcodes erhalten. Die Softwarebibliothek 2 ist ein Code, der von einem externen Zulieferer hergestellt und gepatcht wurde.

Die ausführbare Software 1 umfasst N vorbestimmte Argumente X₁, X₂, ..., X_{N}. Die vorbestimmten Argumente X₁, X₂, ..., X_{N} sind Zahlen. Die ausführbare Software 1 umfasst zudem eine erste Funktion P und eine zweite invertierende Funktion V.

Die Softwarebibliothek 2 umfasst vorbestimmte Funktionen F(X₁), F(X₂), ..., F(X_{N}), die jeweils mit den vorbestimmten Argumenten X₁, X₂, ..., X_{N} durch die ausführbare Software 1 abrufbar sind.

Zudem umfasst die Softwarebibliothek 2 eine erste invertierende Funktion Q sowie eine zweite Funktion U. Die erste invertierende Funktion Q ist die inverse Funktion zur ersten Funktion P und ist derart definiert, dass Q(P(A)) = A für ein beliebiges Argument A. Zudem ist die zweite invertierende Funktion V die inverse Funktion zur zweiten Funktion U und ist derart definiert, dass V(U(A)) = A für ein beliebiges Argument A.

Der Schutz der Software 3 gegen das unbefugte Nutzen erfolgt gemäß einem in der Fig. 2 dargestellten Verfahren zum Schützen einer Software 3 gegen ein unbefugtes Nutzen. Im Folgenden wird der Schutz der Software in Bezug auf die Fig. 1 und 2 beschrieben.

In einem Schritt S1 wendet die ausführbare Software 1 die erste Funktion P auf ein vorbestimmtes Argument Xᵢ aus den vorbestimmten Argumenten X₁, X₂, ..., X_{N} an, und erzeugt somit ein geschütztes Argument P(Xᵢ). Die erste Funktion P ist eine erste Verschlüsselungsfunktion, mit der das vorbestimmte Argument Xᵢ verschlüsselt wird. Zur Verschlüsselung des vorbestimmten Arguments Xᵢ verwendet die erste Funktion P einen ersten Verschlüsselungsschlüssel, der ein symmetrischer kryptographischer Schlüssel ist. In alternativen Ausführungsformen kann die erste Funktion P auch durch einen beliebigen invertierbaren Transformationsalgorithmus definiert sein. Das geschützte Argument P(Xᵢ) ist das mit der ersten Funktion P verschlüsselte vorbestimmte Argument Xᵢ.

Das geschützte Argument P(Xᵢ) umfasst das vorbestimmte Argument Xᵢ derart, dass das vorbestimmte Argument Xᵢ nur durch Anwenden der ersten invertierenden Funktion Q ermittelbar ist. Das vorbestimmte Argument Xᵢ kann somit nicht durch einen böswilligen Nutzer abgefangen werden.

In einem Schritt S11 wird das geschützte Argument P(Xᵢ) an die Softwarebibliothek 2 übertragen, wie in der Fig. 1 durch den linken Pfeil dargestellt.

In einem Schritt S12 wird in der Softwarebibliothek 2 die erste invertierende Funktion Q auf das geschützte Argument P(Xᵢ) angewandt. Dadurch, dass die erste invertierende Funktion Q die inverse Funktion zur ersten Funktion P ist, wird in dem Schritt S12 das vorbestimmte Argument Xᵢ aus dem geschützten Argument P(Xᵢ) zurückgewonnen. Die erste invertierende Funktion Q verwendet hierzu den auch für die Verschlüsselung eingesetzten symmetrischen ersten Verschlüsselungsschlüssel.

Die Softwarebibliothek 2 erhält somit das vorbestimmte Argument Xᵢ von der ausführbaren Software 1, ohne dass dieses manipuliert werden kann.

Die Softwarebibliothek 2 stellt der ausführbaren Software 1 in einem Schritt S20 die vorbestimmte Funktion F(Xᵢ), die dem ermittelten vorbestimmten Argument Xᵢ entspricht, bereit. Diese wird an die ausführbare Software 1 übertragen.

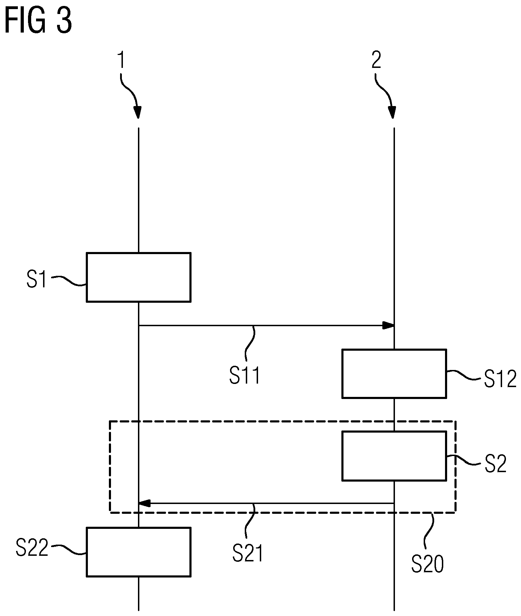

Die Fig. 3 zeigt ein Verfahren zum Schützen einer Software 3 gegen ein unbefugtes Nutzen gemäß einer zweiten Ausführungsform. Zum Schutz der Vorrichtung 4 aus der Fig. 1 kann das Verfahren aus der Fig. 3 durchgeführt werden.

Die Schritte S1, S11 und S12 wurden bereits mit Bezug auf die Fig. 2 beschrieben. In einem dem Schritt S12 folgenden Schritt S2 wird gemäß dem Verfahren der zweiten Ausführungsform in der Softwarebibliothek 2 die zweite Funktion U auf die vorbestimmte Funktion F(Xᵢ) angewandt, wodurch eine geschützte Funktion U(F(Xᵢ)) erzeugt wird.

Die zweite Funktion U ist eine zweite Verschlüsselungsfunktion, mit der die vorbestimmte Funktion F(Xᵢ), die dem vorbestimmten Argument Xᵢ entspricht, verschlüsselt werden kann. Zur Verschlüsselung der vorbestimmten Funktion F(Xᵢ) verwendet die zweite Funktion U einen zweiten Verschlüsselungsschlüssel, der ein symmetrischer kryptographischer Schlüssel ist. Die geschützte Funktion U(F(Xᵢ)) ist die mit der zweiten Funktion U verschlüsselte vorbestimmte Funktion F(Xᵢ).

Die geschützte Funktion U(F(Xᵢ)) umfasst die vorbestimmte Funktion F(Xᵢ) derart, dass die vorbestimmte Funktion F(Xᵢ) nur durch Anwenden der zweiten invertierenden Funktion V ermittelbar ist. Die vorbestimmte Funktion F(Xᵢ) kann somit nicht durch einen böswilligen Nutzer abgefangen werden.

In einem Schritt S21 wird die geschützte Funktion U(F(Xᵢ)) an die ausführbare Software 1 übertragen, wie in der Fig. 1 durch den rechten Pfeil dargestellt. Die Schritte S2 und S21 bilden zusammen den zuvor beschriebenen Schritt S20 aus.

In einem Schritt S22 wendet die ausführbare Software 1 die zweite invertierende Funktion V auf die geschützte Funktion U(F(Xᵢ)) an, wodurch die vorbestimmte Funktion F(Xᵢ) zurückgewonnen wird. Die vorbestimmte Funktion F(Xᵢ) wird anschließend durch die ausführbare Software 1 verwendet und/oder ausgegeben.

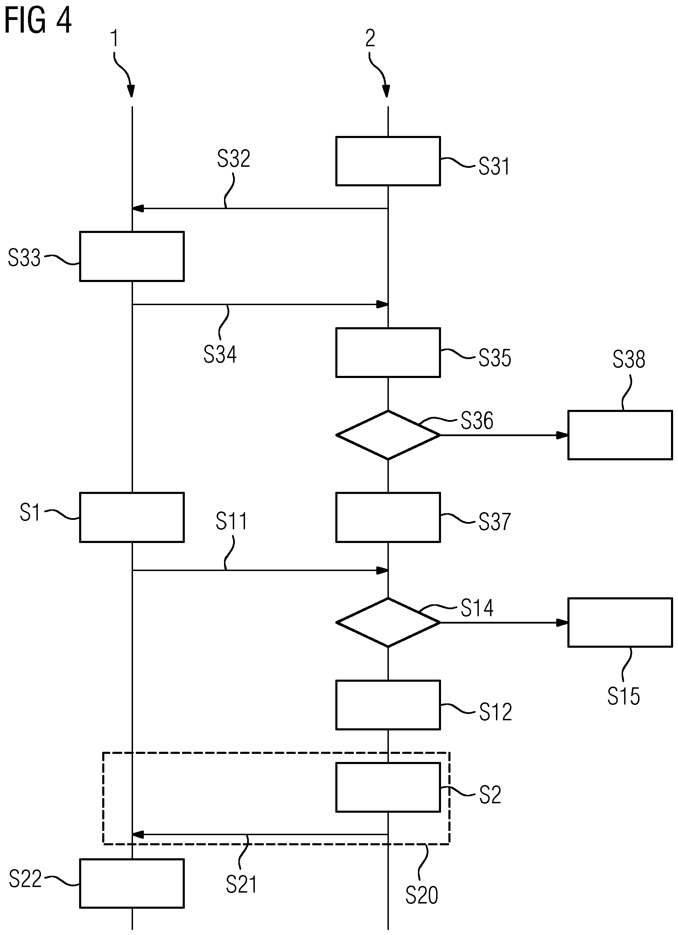

Die Fig. 4 zeigt ein Verfahren zum Schützen einer Software 3 gegen ein unbefugtes Nutzen gemäß einer dritten Ausführungsform. Das in der Fig. 4 dargestellte Verfahren ist eine Erweiterung für das Verfahren aus der Fig. 3. Die in der Fig. 1 dargestellte Vorrichtung 4 kann das in der Fig. 4 dargestellte Verfahren durchführen.

In den Schritten S31 bis S37 authentisiert sich die ausführbare Software 1 bei der Softwarebibliothek 2. Hierzu erzeugt die Softwarebibliothek 2 in einem Schritt S31 Überprüfungsdaten. Die Überprüfungsdaten werden mit einem Zufallszahlengenerator erzeugt.

In einem Schritt S32 werden die Überprüfungsdaten an die ausführbare Software 1 übertragen. Die ausführbare Software 1 verschlüsselt die Überprüfungsdaten in einem Schritt S33 mit einem kryptographischen Schlüssel und erzeugt somit verschlüsselte Überprüfungsdaten, welche in einem Schritt S34 an die Softwarebibliothek 2 übertragen werden.

In einem Schritt S35 entschlüsselt die Softwarebibliothek 2 die empfangenen verschlüsselten Überprüfungsdaten und erzeugt somit Vergleichsschlüsseldaten. Die Vergleichsschlüsseldaten werden in einem Schritt S36 mit den Überprüfungsdaten verglichen. Falls in dem Schritt S36 ermittelt wird, dass die Überprüfungsdaten mit den Vergleichsschlüsseldaten übereinstimmen, wird die ausführbare Software 1 erfolgreich bei der Softwarebibliothek 2 authentisiert und ein Bereitstellen der vorbestimmten Funktionen F(X₁), F(X₂), ..., F(X_{N}) an die ausführbare Software 1 wird in einem Schritt S37 zugelassen.

Falls in dem Schritt S36 jedoch bestimmt wird, dass die Überprüfungsdaten nicht mit den Vergleichsschlüsseldaten übereinstimmen, wird ein Bereitstellen der vorbestimmten Funktionen F(X₁), F(X₂), ..., F(X_{N}) an die ausführbare Software 1 in einem Schritt S38 nicht zugelassen. In dem Schritt S38 wird eine Fehlermeldung ausgegeben.

Nach dem erfolgreichen Authentisieren der ausführbaren Software 1 bei der Softwarebibliothek 2 in dem Schritt S37 können die bereits beschrieben Schritte S1 und S11 durchgeführt werden. Bei Empfang des geschützten Arguments P(Xᵢ) ermittelt die Softwarebibliothek 2 in einem Schritt S14, ob das empfangene Argument P(Xᵢ) tatsächlich mit der ersten Funktion P geschützt, insbesondere verschlüsselt, wurde. Falls ermittelt wird, dass das empfangene Argument P(Xᵢ) mit der ersten Funktion P geschützt wurde, werden die bereits beschriebenen Schritte S12, S2, S21 und S22 durchgeführt.

Falls allerdings ermittelt wird, dass das empfangene Argument P(Xᵢ) nicht mit der ersten Funktion P geschützt wurde, wird in einem Schritt S15 das Bereitstellen der vorbestimmten Funktion F(Xᵢ) unterbunden. In dem Schritt S15 wird ferner eine Fehlermeldung an einen Nutzer angegeben, die einen Angriff auf die Software 3 meldet.

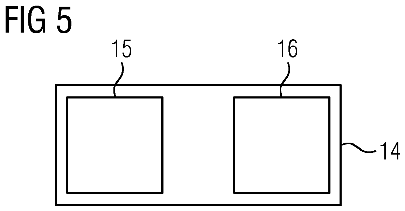

Die Fig. 5 zeigt eine Vorrichtung 14 zum Schützen einer Software gegen ein unbefugtes Nutzen gemäß einer zweiten Ausführungsform. Die Vorrichtung 14 umfasst eine erste Einheit 15 und eine zweite Einheit 16, welche hier Prozessoren sind.

Die Vorrichtung 14 ist geeignet, die Verfahren zum Schützen einer Software gemäß den Fig. 2 bis 4 durchzuführen. Hierbei wird der bereits beschriebene Schritt S1 durch die erste Einheit 15 durchgeführt und der Schritt S2 wird durch die zweiten Einheit 16 durchgeführt.

Obwohl die vorliegende Erfindung anhand von Ausführungsbeispielen beschrieben wurde, ist sie vielfältig modifizierbar. Zum Beispiel kann die erste und/oder zweite Funktion P, U eine beliebige Operation auf das vorbestimmte Argument Xᵢ und/oder auf die vorbestimmte Funktion F(Xᵢ) durchführen. Insbesondere kann die erste und/oder zweite Funktion P, U das vorbestimmte Argument Xᵢ und/oder die vorbestimmte Funktion F(Xᵢ) digital signieren und/oder diesen einen Nachrichtenauthentisierungscode zufügen. Die erste und/oder zweite invertierende Funktion Q, V können der ersten und/oder zweiten Funktion P, U angepasst werden. Die Software 3 kann auch mehrere Softwarebibliotheken 2 umfassen. Zudem kann die Softwarebibliothek 2 für ein einziges Argument Xᵢ mehrere Funktionen F(Xᵢ) bereitstellen. Unterschiedliche vorbestimmte Argumente Xᵢ können mit einer selben ersten Funktion P geschützt werden; es können aber auch unterschiedliche erste Funktionen P für die unterschiedlichen vorbestimmten Argumente Xᵢ vorgesehen sein. Dasselbe gilt für die zweite Funktion U.

Die Authentisierung der ausführbaren Software 1 bei der Softwarebibliothek 2 kann zudem auch in einem Signaturverfahren, in dem die Überprüfungsdaten mit einer digitalen Signatur signiert werden, und/oder einem Nachrichtenauthentisierungsverfahren, in dem den Überprüfungsdaten ein Nachrichtenauthentisierungscode zugordnet wird, erfolgen. Ferner kann auch die Softwarebibliothek 2 in einem ähnlichen Authentisierungsverfahren bei der ausführbaren Software 1 authentisiert werden.

## Patentansprüche

1. Verfahren zum Schützen einer Software (3) gegen ein unbefugtes Nutzen, wobei die Software (3) eine ausführbare Software (1) und eine Softwarebibliothek (2) umfasst, die der ausführbaren Software (1) für vorbestimmte Argumente (X₁, X₂, ..., X_{N}) vorbestimmte Funktionen (F(X₁), F(X₂), ..., F(X_{N})) bereitstellt; umfassend:
Anwenden (S1) einer ersten Funktion (P) auf ein vorbestimmtes Argument (Xᵢ) aus den vorbestimmten Argumenten (X₁, X₂, ..., X_{N}) zum Erzeugen eines geschützten Arguments (P(Xᵢ)) durch die ausführbare Software (1) derart, dass das vorbestimmte Argument (Xᵢ) nur unter Anwenden einer ersten invertierenden Funktion (Q) auf das geschützte Argument (P(Xᵢ)) ermittelbar ist, wobei die erste Funktion (P) ein kryptographischer Algorithmus ist;
Übertragen (S11) des geschützten Arguments (P(Xᵢ)) an die Softwarebibliothek (2) von der ausführbaren Software (1);
Anwenden (S12) der ersten invertierenden Funktion (Qᵢ) auf das geschützte Argument (P(Xᵢ)) durch die Softwarebibliothek (2) zum Ermitteln des vorbestimmten Arguments (Xᵢ);
Bereitstellen (S13) der vorbestimmten Funktion (F(Xᵢ)) für das ermittelte vorbestimmte Argument (Xᵢ) an die ausführbare Software (1) durch die Softwarebibliothek (2);
Anwenden (S2) einer zweiten Funktion (U) auf die vorbestimmte Funktion (F(Xᵢ)) aus den vorbestimmten Funktionen (F(X₁), F(X₂), ..., F(X_{N})) zum Erzeugen einer geschützten Funktion (U(F(Xᵢ))) durch die Softwarebibliothek (2) derart, dass die vorbestimmte Funktion (F(Xᵢ)) nur unter Anwenden einer zweiten invertierenden Funktion (V) auf die geschützte Funktion (U(F(Xᵢ))) ermittelbar ist, wobei die zweite Funktion (U) ein kryptographischer Algorithmus ist;
Übertragen (S21) der geschützten Funktion (U(F(Xᵢ))) an die ausführbare Software (1) von der Softwarebibliothek (2); und
Anwenden (S22) der zweiten invertierenden Funktion (V) auf die geschützte Funktion (U(F(Xᵢ))) durch die ausführbare Software (1) zum Ermitteln der vorbestimmten Funktion (F(Xᵢ)).

2. Verfahren nach Anspruch 1, wobei die erste Funktion (P) das vorbestimmte Argument (Xᵢ) mit einem ersten Verschlüsselungsschlüssel verschlüsselt, das vorbestimmte Argument (Xᵢ) mit Hilfe eines ersten Signaturschlüssels mit einer ersten digitalen Signatur signiert und/oder dem vorbestimmten Argument (Xᵢ) einen ersten Nachrichtenauthentisierungscode zufügt; und/oder
wobei die zweite Funktion (U) die vorbestimmte Funktion (F(Xᵢ)) mit einem zweiten Verschlüsselungsschlüssel verschlüsselt, die vorbestimmte Funktion (F(Xᵢ)) mit Hilfe eines zweiten Signaturschlüssels mit einer zweiten digitalen Signatur signiert und/oder der vorbestimmten Funktion (F(Xᵢ)) einen zweiten Nachrichtenauthentisierungscode zufügt.

3. Verfahren nach Anspruch 1 oder 2, wobei die erste invertierende Funktion (Q) das geschützte Argument (P(Xᵢ)) mit einem ersten Entschlüsselungsschlüssel entschlüsselt, eine digitale Signatur des geschützten Arguments (P(Xᵢ)) mit einem ersten Verifikationsschlüssel prüft und/oder einen ersten Nachrichtenauthentifizierungscode des geschützten Arguments prüft; und/oder
wobei die zweite invertierende Funktion (V) die geschützte Funktion (U(F(Xᵢ))) mit einem zweiten Entschlüsselungsschlüssel entschlüsselt und/oder eine digitale Signatur der geschützten Funktion (U(F(Xᵢ))) prüft und/oder einen zweiten Nachrichtenauthentifizierungscode der geschützten Funktion prüft.

4. Verfahren nach einem der Ansprüche 1 bis 3, welches ferner umfasst:
Ermitteln (S14) durch die Softwarebibliothek (2), ob ein durch die Softwarebibliothek (2) empfangenes Argument mit der ersten Funktion (P) geschützt wurde; und
falls ermittelt wird, dass das durch die Softwarebibliothek (2) empfangene Argument nicht mit der ersten Funktion (P) geschützt wurde, Unterbinden (S15) des Bereitstellens der vorbestimmten Funktion (F(Xᵢ)) an die ausführbare Software (1) .

5. Verfahren nach einem der Ansprüche 1 bis 4, welches ferner umfasst:
Ermitteln durch die ausführbare Software (1), ob eine durch die ausführbare Software (1) empfangenes Funktion mit der zweiten Funktion (U) geschützt wurde; und
falls ermittelt wird, dass die durch die ausführbare Software (1) empfangene Funktion nicht mit der zweiten Funktion (U) geschützt wurde, Ausgeben einer Fehlermeldung und/oder Löschen von zumindest einem Teil der Software (3).

6. Verfahren nach einem der Ansprüche 1 bis 5, wobei die vorbestimmten Funktionen (F(X₁), F(X₂), ..., F(Xₙ)) in der Softwarebibliothek (2) verschlüsselt vorliegen.

7. Verfahren nach einem der Ansprüche 1 bis 6, welches ferner umfasst:
Authentisieren (S31 - S37) der Softwarebibliothek (2) bei der ausführbaren Software (1) und/oder ein Authentisieren der ausführbaren Software (1) bei der Softwarebibliothek (2).

8. Computerprogrammprodukt, welches auf einer programmgesteuerten Einrichtung die Durchführung des Verfahrens nach einem der Ansprüche 1 bis 7 veranlasst.

9. Vorrichtung (4, 14) zum Schützen einer Software (3) gegen ein unbefugtes Nutzen, wobei die Vorrichtung eingerichtet ist, das Verfahren nach einem der Ansprüche 1 bis 7 durchzuführen, wobei die Software (3) eine ausführbare Software (1) und eine Softwarebibliothek (2) umfasst, die der ausführbaren Software (1) für vorbestimmte Argumente (X₁, X₂, ..., X_{N}) vorbestimmte Funktionen (F(X₁), F(X₂), ..., F(X_{N})) bereitstellt; umfassend:
eine erste Einheit (15) zum Anwenden der ersten Funktion (P) nach Anspruch 1; und
eine zweite Einheit (16) zum Anwenden der zweiten Funktion (U) nach Anspruch 1.

## Claims

1. Method for protecting software (3) from unauthorized use, wherein the software (3) comprises executable software (1) and a software library (2) which provides the executable software (1) with predetermined functions (F(X₁), F(X₂), ..., F(X_{N})) for predetermined arguments (X₁, X₂, ..., X_{N}); comprising:
applying (S1) a first function (P) to a predetermined argument (Xᵢ) from the predetermined arguments (X₁, X₂, ..., X_{N}) in order to generate a protected argument (P(Xᵢ)) by means of the executable software (1) in such a manner that the predetermined argument (Xᵢ) can be determined only by applying a first inverting function (Q) to the protected argument (P(Xᵢ)), wherein the first function (P) is a cryptographic algorithm;
transmitting (S11) the protected argument (P(Xᵢ)) from the executable software (1) to the software library (2);
applying (S12) the first inverting function (Qᵢ) to the protected argument (P(Xᵢ)) by means of the software library (2) in order to determine the predetermined argument (Xᵢ);
providing (S13) the executable software (1) with the predetermined function (F(Xᵢ)) for the determined predetermined argument (Xᵢ) by means of the software library (2);
applying (S2) a second function (U) to the predetermined function (F(Xᵢ)) from the predetermined functions (F(X₁), F(X₂), ..., F(X_{N})) in order to generate a protected function (U(F(Xᵢ))) by means of the software library (2) in such a manner that the predetermined function (F(Xᵢ)) can be determined only by applying a second inverting function (V) to the protected function (U(F(Xᵢ))), wherein the second function (U) is a cryptographic algorithm;
transmitting (S21) the protected function (U(F(Xᵢ))) from the software library (2) to the executable software (1); and
applying (S22) the second inverting function (V) to the protected function (U(F(Xᵢ))) by means of the executable software (1) in order to determine the predetermined function (F(Xᵢ)).

2. Method according to Claim 1, wherein the first function (P) encrypts the predetermined argument (Xᵢ) with a first encryption key, signs the predetermined argument (Xᵢ) with a first digital signature with the aid of a first signature key and/or adds a first message authentication code to the predetermined argument (Xᵢ) ; and/or
wherein the second function (U) encrypts the predetermined function (F(Xᵢ)) with a second encryption key, signs the predetermined function (F(Xᵢ)) with a second digital signature with the aid of a second signature key and/or adds a second message authentication code to the predetermined function (F(Xᵢ)).

3. Method according to Claim 1 or 2, wherein the first inverting function (Q) decrypts the protected argument (P(Xᵢ)) with a first decryption key, checks a digital signature of the protected argument (P(Xᵢ)) with a first verification key and/or checks a first message authentication code of the protected argument; and/or
wherein the second inverting function (V) decrypts the protected function (U(F(Xᵢ))) with a second decryption key and/or checks a digital signature of the protected function (U(F(Xᵢ))) and/or checks a second message authentication code of the protected function.

4. Method according to one of Claims 1 to 3, which also comprises:
determining (S14) by means of the software library (2) whether an argument received by the software library (2) has been protected with the first function (P); and
preventing (S15) the executable software (1) from being provided with the predetermined function (F(Xᵢ)) if it is determined that the argument received by the software library (2) has not been protected with the first function (P).

5. Method according to one of Claims 1 to 4, which also comprises:
determining by means of the executable software (1) whether a function received by the executable software (1) has been protected with the second function (U); and
outputting an error message and/or deleting at least one part of the software (3) if it is determined that the function received by the executable software (1) has not been protected with the second function (U).

6. Method according to one of Claims 1 to 5, wherein the predetermined functions (F(X₁), F(X₂), ..., F(X_{N})) are present in encrypted form in the software library (2).

7. Method according to one of Claims 1 to 6, which also comprises:
authenticating (S31-S37) the software library (2) with the executable software (1) and/or authenticating the executable software (1) with the software library (2).

8. Computer program product which causes the method according to one of Claims 1 to 7 to be carried out on a program-controlled device.

9. Apparatus (4, 14) for protecting software (3) from unauthorized use, wherein the apparatus is configured to carry out the method according to one of Claims 1 to 7, wherein the software (3) comprises executable software (1) and a software library (2) which provides the executable software (1) with predetermined functions (F(X₁), F(X₂), ..., F(X_{N})) for predetermined arguments (X₁, X₂, ..., X_{N}); comprising:
a first unit (15) for applying the first function (P) according to Claim 1;
a second unit (16) for applying the second function (U) according to Claim 1.

## Revendications

1. Procédé de protection d'un logiciel (3) contre une utilisation non autorisée, le logiciel (3) comprenant un logiciel exécutable (1) et une bibliothèque logicielle (2) qui met à la disposition du logiciel exécutable (1) des fonctions prédéfinies (F(X₁), F(X₂), ..., F(X_{N})) pour des arguments prédéfinis (X₁, X₂, ..., X_{N}), comprenant :
l'application (S1) d'une première fonction (P) à un argument prédéfini (Xᵢ) parmi les arguments prédéfinis (X₁, X₂, ..., X_{N}) pour la génération d'un argument protégé (P(Xᵢ)) par le logiciel exécutable (1) de telle sorte que l'argument prédéfini (Xᵢ) ne peut être déterminé qu'en appliquant une première fonction d'inversion (Q) à l'argument protégé (P(Xᵢ)), la première fonction (P) étant un algorithme cryptographique ;
transmission (S11) de l'argument protégé (P(Xᵢ)) du logiciel exécutable (1) à la bibliothèque logicielle (2) ;
application (S12) de la première fonction d'inversion (Qᵢ) à l'argument protégé (P(Xᵢ)) par la bibliothèque logicielle (2) pour déterminer l'argument prédéfini (Xᵢ) ;
mise à disposition (S13) de la fonction prédéfinie (F(Xᵢ)) pour l'argument prédéfini déterminé (Xᵢ) au logiciel exécutable (1) par la bibliothèque logicielle (2) ;
application (S2) d'une deuxième fonction (U) à la fonction prédéfinie (F(Xᵢ)) parmi les fonctions prédéfinies (F(X₁), F(X₂), ..., F(X_{N})) pour génération d'une fonction protégée (U(F(Xᵢ))) par la bibliothèque logicielle (2) de telle sorte que la fonction prédéfinie (F(Xᵢ)) ne peut être déterminée qu'en appliquant une deuxième fonction d'inversion (V) à la fonction protégée (U(F(Xᵢ))), la deuxième fonction (U) étant un algorithme cryptographique ;
transmission (S21) de la fonction protégée (U(F(Xᵢ))) de la bibliothèque logicielle (2) au logiciel exécutable (1) et application (S22) de la deuxième fonction d'inversion (V) à la fonction protégée (U(F(Xᵢ))) par le logiciel exécutable (1) pour déterminer la fonction prédéfinie (F(Xᵢ)).

2. Procédé selon la revendication 1, la première fonction (P) cryptant l'argument prédéfini (Xᵢ) avec une première clé de cryptage, signant l'argument prédéfini (Xi) à l'aide d'une première clé de signature avec une première signature numérique et/ou ajoutant un premier code d'authentification de message à l'argument prédéfini (Xᵢ) et/ou la deuxième fonction (U) cryptant la fonction prédéfinie (F(Xᵢ)) avec une deuxième clé de cryptage, signant la fonction prédéfinie (F(Xᵢ)) à l'aide d'une deuxième clé de signature avec une deuxième signature numérique et/ou ajoutant un deuxième code d'authentification de message à la fonction prédéfinie (F(Xᵢ)).

3. Procédé selon la revendication 1 ou 2, la première fonction d'inversion (Q) décryptant l'argument protégé (P(Xᵢ)) avec une première clé de décryptage, vérifiant une signature numérique de l'argument protégé (P(Xᵢ)) avec une première clé de vérification et/ou vérifiant un premier code d'authentification de message de l'argument protégé et/ou la deuxième fonction d'inversion (V) décryptant la fonction protégée (U(F(Xᵢ))) avec une deuxième clé de décryptage et/ou vérifiant une signature numérique de la fonction protégée (U(F(Xᵢ))) et/ou vérifiant un deuxième code d'authentification de message de la fonction protégée.

4. Procédé selon l'une des revendications 1 à 3, comprenant en outre :
la détermination (S14), par la bibliothèque logicielle (2), si un argument reçu par la bibliothèque logicielle (2) a été protégé avec la première fonction (P) et, s'il est déterminé que l'argument reçu par la bibliothèque logicielle (2) n'a pas été protégé avec la première fonction (P), l'empêchement (S15) de la mise à disposition de la fonction prédéfinie (F(Xᵢ)) au logiciel exécutable (1).

5. Procédé selon l'une des revendications 1 à 4, comprenant en outre:
la détermination, par le logiciel exécutable (1), si une fonction reçue par le logiciel exécutable (1) a été protégée avec la deuxième fonction (U) et, s'il est déterminé que la fonction reçue par le logiciel exécutable (1) n'a pas été protégée avec la deuxième fonction (U), l'émission d'un message d'erreur et/ou la suppression d'au moins une partie du logiciel (3).

6. Procédé selon l'une des revendications 1 à 5, les fonctions prédéfinies (F(X₁), F(X₂), ..., F(Xₙ)) se trouvant sous forme cryptée dans la bibliothèque logicielle (2).

7. Procédé selon l'une des revendications 1 à 6, comprenant en outre :
l'authentification (S31 - S37) de la bibliothèque logicielle (2) auprès du logiciel exécutable (1) et/ou une authentification du logiciel exécutable (1) auprès de la bibliothèque logicielle (2).

8. Produit de programme informatique qui fait exécuter le procédé selon l'une des revendications 1 à 7 sur un dispositif commandé par programme.

9. Dispositif (4, 14) destiné à protéger un logiciel (3) contre une utilisation non autorisée, le dispositif étant configuré pour exécuter le procédé selon l'une des revendications 1 à 7, le logiciel (3) comprenant un logiciel exécutable (1) et une bibliothèque logicielle (2) qui met à la disposition du logiciel exécutable (1) des fonctions prédéfinies (F(X₁), F(X₂), ..., F(X_{N})) pour des arguments prédéfinis (X₁, X₂, ..., X_{N}), comprenant :
une première unité (15) pour l'application de la première fonction (P) selon la revendication 1 et
une deuxième unité (16) pour l'application de la deuxième fonction (U) selon la revendication 1.
